# NEUE EUROPÄISCHE PATENTSCHRIFT

(11) **EP 2 747 925 B2**
(45) Veröffentlichungstag und Bekanntmachung des Hinweises auf die Entscheidung über den Einspruch: **21.11.2018**
(45) Hinweis auf die Patenterteilung: 28.10.2015
(21) Anmeldenummer: 12772700.6
(22) Anmeldetag: 23.08.2012
(51) Int. Cl.: B23C 5/20

(54) **DOPPELSEITIGER SCHNEIDEINSATZ ZUM FRÄSEN**
DOUBLE-SIDED CUTTING INSERT FOR MILLING
INSERT DE COUPE À DOUBLE FACE POUR LE FRAISAGE

(30) Priorität: 26.08.2011 AT 4692011 U
(43) Veröffentlichungstag der Anmeldung: 02.07.2014
(73) Patentinhaber: Ceratizit Austria Gesellschaft m.b.H., 6600 Reutte (AT)
(72) Erfinder: DIEPOLD, Anton, 82491 Grainau (DE)
(74) Vertreter: Ciesla, Dirk
(86) Internationale Anmeldenummer: PCT/AT2012/000220
(87) Internationale Veröffentlichungsnummer: WO 2013/029072

(56) Entgegenhaltungen:
- WO-A1-2008/078892
- WO-A1-2011/001939
- WO-A1-2011/052340
- WO-A2-2010/093120
- US-A1- 2007 003 384

## Beschreibung

Die vorliegende Erfindung betrifft einen doppelseitigen Schneideinsatz zum Fräsen gemäss dem Oberbegriff des Patentanspruchs 1.

Zur zerspanenden Bearbeitung von insbesondere metallischen Werkstoffen kommen häufig Fräswerkzeuge zum Einsatz, die einen Trägerkörper aufweisen, der mit einem Schneideinsatz oder einer Mehrzahl von Schneideinsätzen versehen ist. Die Schneideinsätze sind dabei üblicherweise austauschbar und stellen Verbrauchsartikel dar, die aufgrund von Verschleiß in mehr oder weniger regelmäßigen Intervallen ausgetauscht werden müssen. Es ist bekannt, die Schneideinsätze als sogenannte Wendeschneidplatten auszubilden, die eine Mehrzahl von identisch ausgebildeten Schneidkantenabschnitten aufweisen, wobei einzelne Schneidkantenabschnitte durch Veränderung der relativen Ausrichtung des Schneideinsatzes zu dem Trägerkörper des Fräswerkzeugs sukzessive in eine aktive Position gebracht werden können, in der diese eine zerspanende Bearbeitung des zu bearbeitenden Werkstücks durchführen. Die jeweils inaktiven Schneidkantenabschnitte treten dabei nicht mit dem Werkstück in Eingriff und können z.B. nach einem Verschleiß des zuvor aktiven Schneidkantenabschnitts in die aktive Position gebracht werden. In dieser Weise werden mehrere unabhängig voneinander zur Verfügung stehende Schneidkantenabschnitte bereitgestellt, die eine effiziente Ausnutzung des Schneideinsatzes ermöglichen.

Um eine möglichst effiziente Ausnutzung des Schneideinsatzes zu erzielen, ist es bekannt, doppelseitige Schneideinsätze zu verwenden, die sowohl an dem Übergang zwischen einer Oberseite und einer umlaufenden Seitenfläche als auch an einem Übergang zwischen einer Unterseite und der umlaufenden Seitenfläche jeweils mit einer Schneidkante versehen sind, die eine Mehrzahl von unabhängig voneinander verwendbaren Schneidkantenabschnitten aufweist.

Insbesondere zum Planfräsen kommen häufig Wendeschneidplatten vom sogenannten S-Typ (square; quadratisch) zum Einsatz, die eine quadratische Grundform mit vier Hauptschneiden, die im Wesentlichen entlang den Seiten eines Quadrats verlaufen, pro Schneidkante aufweisen. Dabei sind zwischen benachbarten Hauptschneiden - über sogenannte aktive und passive Schneidecken - anschließende Nebenschneiden bzw. Planschneiden angeordnet, die sich z.B. typischerweise in einem Winkel von ca. 135° relativ zu den Hauptschneiden erstrecken können. In einem eingebauten Zustand des Schneideinsatzes in einem Fräswerkzeug ist dabei eine Nebenschneide üblicherweise im Wesentlichen senkrecht zu einer Rotationsachse des Fräswerkzeugs angeordnet und dient als die Oberfläche glättende Planschneide. Die in Bezug auf das Fräswerkzeug radial außen über eine aktive Schneidecke an die Nebenschneide anschließende Hauptschneide dient als hauptsächlich spanabhebende Schneide.

Um im Betrieb eine Abnutzung bzw. Beschädigung der bezüglich der Rotation hinteren Schneidkante des doppelseitigen Schneideinsatzes zu vermeiden, muss der Schneideinsatz derart geneigt in dem Fräswerkzeug angeordnet werden, dass dieser sowohl in axialer Richtung nach vorne gekippt ist, um die hinter der in das Werkstück eingreifenden Nebenschneide befindliche Nebenschneide der anderen Schneidkante zu schützen, als auch in radialer Richtung gekippt ist, um die hinter der in das Werkstück eingreifenden Hauptschneide befindliche Hauptschneide der anderen Schneidkante zu schützen. Ein starkes Verkippen in axialer und/oder radialer Richtung kann sowohl in Bezug auf die wirkenden Schneidkräfte als auch in Bezug auf die Spanbildung zu Problemen führen.

Es ist zu beachten, dass in dem vorliegenden technischen Gebiet gewisse Begriffe wie z.B. Freiwinkel, Spanwinkel etc. einerseits "nominell" in Bezug auf den Schneideinsatz definiert werden können und andererseits auch (abweichend) "effektiv" in Bezug auf die Einbausituation des Schneideinsatzes an einem Fräswerkzeug relativ zu dem Werkstück definiert werden können. In der folgenden Beschreibung werden diese Begriffe hauptsächlich "nominell" verwendet, ohne dass jeweils ein entsprechender Zusatz ausdrücklich genannt wird.

Es ist wünschenswert mit einem Schneideinsatz einen möglichst breiten Einsatzbereich zu erzielen, insbesondere einen Einsatz mit unterschiedlichen Vorschubgeschwindigkeiten, Spanbreiten und/oder Spantiefen zu ermöglichen.

WO 2010/093120 A2 beschreibt ein Fräswerkzeug mit einem doppelseitigen Schneideinsatz. Eine Hauptschneide weist ausgehend von einer Schneidecke zunächst einen abfallenden Verlauf auf, der dann wieder in einen ansteigenden Verlauf übergeht.

WO 2011/052340 A1 beschreibt einen Schneideinsatz mit einer oberen Oberfläche, einer unteren Oberfläche, Seitenoberflächen und jeweils an den Schnittlinien zwischen der oberen Oberfläche und den Seitenoberflächen angeordneten Schneidkantenabschnitten. Die Schneidkantenabschnitte weisen jeweils eine Hauptschneidkante, eine Flachschneidkante und eine zwischen der Hauptschneidkante und der Flachschneidkante angeordnete Hilfsschneidkante auf.

Es ist Aufgabe der vorliegenden Erfindung, einen Schneideinsatz bereitzustellen, der sowohl eine effiziente Ausnutzung der vorhandenen Schneidkanten ermöglicht als auch im Betrieb zu einer hohen Güte der bearbeiteten Werkstückoberfläche führt.

Die Aufgabe wird durch einen doppelseitigen Schneideinsatz zum Fräsen nach Anspruch 1 gelöst. Vorteilhafte Weiterbildungen sind in den abhängigen Ansprüchen angegeben.

Die jeweiligen Hauptschneiden verlaufen somit ausgehend von einer aktiven Schneidecke, die im Betrieb zwischen einer in das zu bearbeitende Material eingreifenden Hauptschneide und einer in das zu bearbeitende Material eingreifenden Nebenschneide angeordnet ist, bis zu der passiven Schneidecke monoton fallend, d.h. die Hauptschneide nähert sich über ihren gesamten Verlauf der Referenzebene an oder verläuft höchstens bereichsweise parallel zu dieser. Durch diese Ausgestaltung kann der Schneideinsatz derart in einem Fräswerkzeug angeordnet werden, dass die Hauptschneide über die gesamte Länge einen positiven effektiven Axialwinkel aufweist und die gesamte Länge der Hauptschneide für einen sanften und effizienten Zerspanungsprozess genutzt werden kann. Somit ermöglicht die Ausgestaltung der Hauptschneide einen breiten Einsatzbereich des Schneideinsatzes.

Da das an der aktiven Schneidecke anschließende Ende einer Nebenschneide jeweils einen größeren Abstand zu der Referenzebene aufweist, als das von der aktiven Schneidecke abgewandte andere Ende der Nebenschneide, schließt die Nebenschneide dabei über eine aktive Schneidecke und eine passive Schneidecke jeweils an benachbarte Hauptschneiden an. Somit kann auch die gesamte Länge der Nebenschneide effizient als Planschneide genutzt werden. Z.B. kann die Nebenschneide an der aktiven Schneidecke denselben ersten Abstand von der Referenzebene aufweisen, wie die ebenfalls dort angrenzende Hauptschneide, und die Nebenschneide kann an der passiven Schneidecke denselben zweiten Abstand von der Referenzebene aufweisen, wie die ebenfalls dort angrenzende andere Hauptschneide. Es ist z.B. aber auch möglich, dass die an die Hauptschneide anschließende Seite der aktiven Schneidecke einen Abstand von der Referenzebene aufweist, der leicht von dem Abstand an der an die Nebenschneide anschließenden Seite abweicht. Ebenso kann die an die Hauptschneide anschließende Seite der passiven Schneidecke einen Abstand von der Referenzebene aufweisen, der leicht von dem Abstand an der an die Nebenschneide anschließenden Seite abweicht. In diesen Fällen verläuft die Schneidecke selbst nicht parallel zu der Referenzebene.

Da die jeweilige Nebenschneide in Aufsicht auf die zugeordnete Nebenfreifläche zumindest bereichsweise konvex ausgebildet ist, wird - verglichen mit einer Ausgestaltung bei der die Nebenschneide z.B. gerade verläuft - eine deutlich verbesserte Qualität der mit der Nebenschneide geglätteten Oberfläche an dem bearbeiteten Werkstück erzielt. Insbesondere wird eine Oberfläche erzielt, die keine relativ spitzen, durch die aktive Schneidecke hervorgerufenen Rillen aufweist.

Durch die Kombination dieser Merkmale werden somit gleichzeitig eine große Variabilität im Betrieb des Schneideinsatzes und eine hervorragende Oberflächenqualität erreicht. Die erste Schneidkante und die zweite Schneidkante können dabei z.B. relativ spitz an dem Übergang zwischen der umlaufenden Seitenfläche und der Oberseite bzw. der Unterseite ausgebildet sein. Es ist z.B. aber auch möglich, die Schneidkanten vollumfänglich oder bereichsweise mit einer Fase zu versehen, z.B. um die Schneidkante zu stabilisieren.

Gemäß der Erfindung nähern sich die Nebenfreiflächen mit zunehmendem Abstand von der zugeordneten Nebenschneide der Symmetrieachse an. Die Nebenfreiflächen können sich in dieser Weise z.B. bis in etwa zu einer Referenzebene erstrecken, die den Schneideinsatz in zwei Hälften unterteilt. Durch die Ausgestaltung der Nebenfreiflächen sind somit im Bereich der Nebenschneiden auf beiden Seiten des Schneideinsatzes positive nominelle Nebenfreiwinkel vorgesehen. In dieser Weise ist erreicht, dass der Schneideinsatz mit geringerer Verkippung in axialer Richtung in einem Fräswerkzeug angeordnet werden kann, da ein im Bereich der Nebenfreifläche auftretender Verschleiß durch diese Ausgestaltung verringert wird. Ferner wird in dieser Weise ein größeres Maß an Gestaltungsfreiheit für die Ausgestaltung einer Spanleitstufe in bzw. auf der Oberseite und der Unterseite des Schneideinsatzes erreicht. Mit der geringeren Verkippung wird auch ein verbessertes Schneidverhalten erzielt.

Gemäß einer Ausgestaltung weist die umlaufende Seitenfläche unmittelbar angrenzend an die Hauptschneiden jeweils Hauptfreiflächen auf und die Hauptfreiflächen nähern sich mit zunehmendem Abstand von der zugeordneten Hauptschneide der Symmetrieachse an. Die Hauptfreiflächen können sich in dieser Weise z.B. bis in etwa zu der Referenzebene erstrecken. Durch die Ausgestaltung der Hauptfreiflächen sind somit im Bereich der Hauptschneiden auf beiden Seiten des Schneideinsatzes positive nominelle Hauptfreiwinkel vorgesehen. Es ist somit erreicht, dass der Schneideinsatz mit geringerer Verkippung in radialer Richtung in einem Fräswerkzeug angeordnet werden kann, da auch bei einem solchen Einbau ein verringerter Verschleiß der Hauptfreiflächen erzielt wird. Somit wird auch im Bereich der Hauptschneiden ein höheres Maß an Gestaltungsfreiheit bezüglich von Spanleitstufen in bzw. an der Oberseite und der Unterseite des Schneideinsatzes erreicht und es kann ein verbessertes Schneidverhalten erzielt werden.

Gemäß einer Ausgestaltung sind die Oberseite und die Unterseite jeweils angrenzend an die Nebenschneiden mit Nebenspanflächen versehen, die sich konvex gekrümmt bis in einen Spangrund erstrecken. Durch diese ausgewölbte Ausgestaltung der Nebenspanflächen bis in den Spangrund wird insbesondere bei geringen Schnitttiefen eine gute Spanführung, insbesondere eine gezieltere Spanlenkung, erreicht.

Gemäß einer Ausgestaltung ist die umlaufende Seitenfläche durch eine umlaufende Einschnürung in eine obere Teilseitenfläche und eine untere Teilseitenfläche unterteilt. In diesem Fall können in konstruktiv einfacher Weise sowohl die Nebenfreiflächen als auch die Hauptfreiflächen bezüglich beider Schneidkanten des Schneideinsatzes mit nominellen positiven Freiwinkeln ausgebildet sein. Die Einschnürung kann dabei z.B. insbesondere parallel zu oder in der Referenzebene verlaufen. Bevorzugt verläuft die Einschnürung dabei in der Referenzebene, sodass diese in einer Ebene und insbesondere nicht schräg zu der Referenzebene verläuft. In diesem Fall ist eine verbesserte und vereinfachte Einspannbarkeit der Schneidplatte in einem Fräswerkzeug ermöglicht.

Gemäß der Erfindung sind die Oberseite und die Unterseite angrenzend an die Schneidkanten mit Spanflächen versehen, die sich mit zunehmender Entfernung von der jeweiligen Schneidkante an die Referenzebene annähern und in einem Spangrund münden, an den sich ein Spanrücken anschließt, der sich mit zunehmendem Abstand von der Schneidkante von der Referenzebene entfernt, und die Höhe des Spanrückens nimmt entlang der jeweiligen Hauptschneide von der aktiven Schneidecke in Richtung der passiven Schneidecke zu. Die Höhe des Spanrückens bestimmt sich dabei in einer Richtung senkrecht zu der Referenzebene vom jeweiligen Spangrund aus bis zum höchsten Punkt des Spanrückens. Mit dieser Ausgestaltung wird insbesondere bei großen Schnitttiefen eine optimierte Spanformung erzielt.

Bevorzugt nimmt ein Radius der spanleitenden Struktur entlang der Hauptschneide von der aktiven Schneidecke in Richtung der passiven Schneidecke zu. Durch diese Ausgestaltung wird, insbesondere in Kombination mit der zunehmenden Höhe des Spanrückens, eine verbesserte Spanformung bei großen Schnitttiefen erreicht, da in dieser Richtung auch die Höhe der Hauptschneide (relativ zu der Referenzebene) abnimmt.

Gemäß einer Ausgestaltung sind die erste Schneidkante und die zweite Schneidkante jeweils mit vier Hauptschneiden und vier Nebenschneiden versehen, wobei benachbarte Hauptschneiden jeweils im Wesentlichen rechtwinklig zueinander angeordnet sind und die Nebenschneiden jeweils in einem stumpfen Winkel zu benachbarten Hauptschneiden verlaufen. In diesem Fall sind pro Schneidkante vier unabhängig voneinander einsetzbare Schneidkantenabschnitte vorgesehen, sodass die Schneidplatte insgesamt 8 -fach indexierbar ausgebildet ist. Die Nebenschneiden können dabei insbesondere in einem Winkel von in etwa 135° zu den benachbarten Hauptschneiden verlaufen.

Gemäß einer Ausgestaltung sind aktive Schneidecken der ersten Schneidkante bezüglich der Referenzebene jeweils passiven Schneidecken der zweiten Schneidkante gegenüberliegend ausgebildet und passive Schneidecken der ersten Schneidkante sind bezüglich der Referenzebene jeweils aktiven Schneidecken der zweiten Schneidkante gegenüberliegend ausgebildet. Somit sind die Hauptschneiden und Nebenschneiden der ersten Schneidkante und der zweiten Schneidkante identisch einsetzbar. Die Hauptschneiden und die Nebenschneiden der ersten Schneidkante können in Aufsicht entlang der Symmetrieachse im Wesentlichen entlang derselben Kontur verlaufen, wie die Hauptschneiden und die Nebenschneiden der zweiten Schneidkante.

Bevorzugt beträgt die Länge der Nebenschneiden zwischen 1/6 und 1/2 der Länge der Hauptschneiden. In diesem Fall kann die Schneidplatte insbesondere vorteilhaft in der Grundform einer sogenannten S-Platte ausgebildet werden, die sich insbesondere für Planfräsen bewährt hat.

Die Aufgabe wird auch durch ein Fräswerkzeug mit zumindest einem zuvor beschriebenen Schneideinsatz gelöst; bei dem der Schneideinsatz derart an dem Fräswerkzeug befestigt ist, dass eine Nebenschneide im Wesentlichen senkrecht zu einer Rotationsachse des Fräswerkzeugs ausgerichtet ist.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine perspektivische Ansicht eines doppelseitigen Schneideinsatzes gemäß einer Ausführungsform;
- Fig. 2:: eine Aufsicht auf den Schneideinsatz von Fig. 1 entlang einer Symmetrieachse;
- Fig. 3:: eine Seitenansicht des Schneideinsatzes in einer Richtung senkrecht zu der Symmetrieachse und im Wesentlichen senkrecht zu Hauptschneiden;
- Fig. 4:: eine Seitenansicht des Schneideinsatzes in einer Richtung senkrecht zu der Symmetrieachse und im Wesentlichen senkrecht zu Nebenschneiden;
- Fig. 5:: eine Detailansicht einer Nebenschneide in einer Blickrichtung senkrecht zu einer Nebenfreifläche;
- Fig. 6:: eine Detailansicht einer Hauptschneide in einer Blickrichtung senkrecht zu einer Hauptfreifläche;
- Fig. 7:: eine Fig. 3 entsprechende Seitenansicht zur Erläuterung der Schnittrichtungen in den Fig. 8a bis 8c;
- Fig. 8a:: einen Schnitt in der Richtung A-A in Fig. 7;
- Fig. 8b:: einen Schnitt in der Richtung B-B in Fig. 7;
- Fig. 8c:: einen Schnitt in der Richtung C-C in Fig. 7;
- Fig. 9a:: eine schematische Darstellung der Anordnung des doppelseitigen Schneideinsatzes in einem Fräswerkzeug; und
- Fig. 9b:: eine vergrößerte Darstellung des Details X aus Fig. 9a.

### AUSFÜHRUNGSFORM

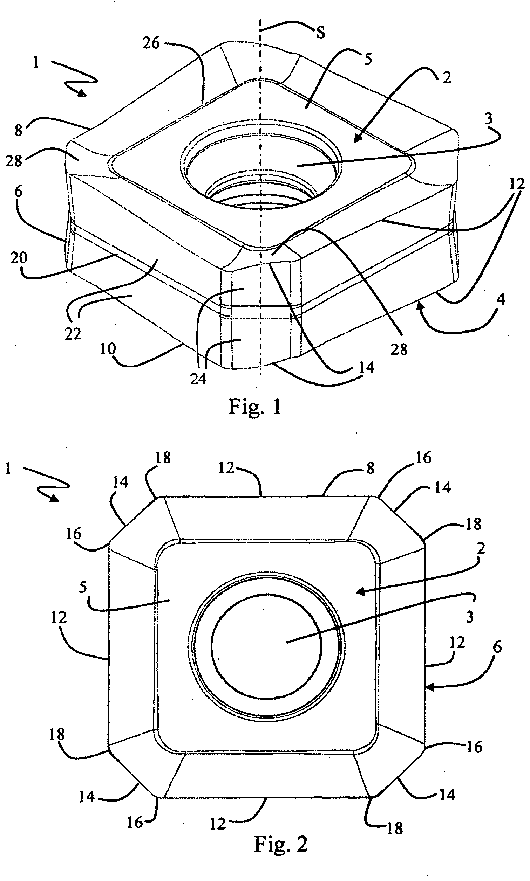

Eine Ausführungsform wird im Folgenden unter Bezug auf die Figuren beschrieben. Zunächst wird die grundlegende Form des doppelseitigen Schneideinsatzes zum Fräsen -1- unter Bezug auf die Fig. 1 bis Fig. 4 beschrieben.

Der doppelseitige Schneideinsatz -1- ist insbesondere zum Planfräsen ausgebildet. Der Schneideinsatz -1- weist eine Oberseite -2-, eine Unterseite -4- und eine umlaufende Seitenfläche -6- auf. An dem Übergang zwischen der Oberseite -2- und der Seitenfläche -6- ist eine erste Schneidkante -8- ausgebildet. An dem Übergang zwischen der Unterseite -4- und der Seitenfläche -6- ist eine identisch zu der ersten Schneidkante -8-ausgebildete zweite Schneidkante -10- ausgebildet. Die erste Schneidkante -8-ist umlaufend um die Oberseite -2- ausgebildet und die zweite Schneidkante -10- ist umlaufend um die Unterseite -4- ausgebildet.

Es ist eine Symmetrieachse -S- vorgesehen, um die der Schneideinsatz -1-eine 4-zählige Rotationssymmetrie aufweist. Eine senkrecht zu der Symmetrieachse -S- verlaufende (imaginäre) Referenzebene -R- unterteilt den Schneideinsatz -1- in eine obere Hälfte und eine untere Hälfte, die identisch ausgebildet sind. Es ist eine konzentrisch zu der Symmetrieachse -S-verlaufende Bohrung -3- vorgesehen, die den Schneideinsatz -1- von der Oberseite -2- zu der Unterseite -4- durchdringt und zur Aufnahme einer Befestigungsschraube zum Befestigen des Schneideinsatzes -1- an einem Fräswerkzeug dient. Umlaufend um die Bohrung -3- ist sowohl an der Oberseite -2- als auch an der Unterseite -4- eine ebene Fläche -5- vorgesehen, die sich parallel zu der Referenzebene -R- erstreckt und als Auflagefläche bei der Befestigung des Schneideinsatzes -1- an einem Fräswerkzeug dient.

Die erste Schneidkante -8- und die zweiten Schneidkante -10- weisen jeweils vier unabhängig voneinander einsetzbare, identisch ausgebildete Schneidkantenabschnitte auf. Die Schneidkantenabschnitte weisen dabei jeweils eine Hauptschneide -12- und eine Nebenschneide -14- auf, die über eine aktive Schneidecke -16- miteinander verbunden sind bzw. ineinander übergehen. Der Begriff "aktive" Schneidecke -16- wird vorliegend verwendet, um eine Schneidecke zu kennzeichnen, die eine Hauptschneide -12- und die zugeordnete Nebenschneide -14- verbindet, die im Betrieb des jeweiligen Schneidkantenabschnitts gleichzeitig zur Materialbearbeitung benutzt werden. Die Hauptschneide -12- und die Nebenschneide -14- eines benachbarten, unabhängig einsetzbaren Schneidkantenabschnitts sind über eine passive Schneidecke -18- miteinander verbunden bzw. gehen über diese ineinander über.

Die Hauptschneiden -12- der Schneidkantenabschnitte der ersten Schneidkante -8- verlaufen, in Aufsicht entlang der Symmetrieachse -S-betrachtet, im Wesentlichen entlang der Kontur eines Quadrats, wie insbesondere in Fig. 2 zu sehen ist. Die Hauptschneiden -12- der Schneidkantenabschnitte der zweiten Schneidkante -10- verlaufen in gleicher Weise. Die Hauptschneiden -12- und die Nebenschneiden -14- sind entlang der jeweiligen Schneidkante -8- bzw. -10- alternierend angeordnet. Die Nebenschneiden -14- verlaufen, in Aufsicht entlang der Symmetrieachse -S-betrachtet, in einem stumpfen Winkel, z.B. in etwa in einem Winkel von 135°, relativ zu den benachbarten Hauptschneiden -12-, wie z.B. in Fig. 2 zu sehen ist. Die Nebenschneiden -14- sind dabei deutlich kürzer als die Hauptschneiden -12- und weisen eine Länge zwischen 1/5 und 1/3 der Länge der Hauptschneiden -12- auf.

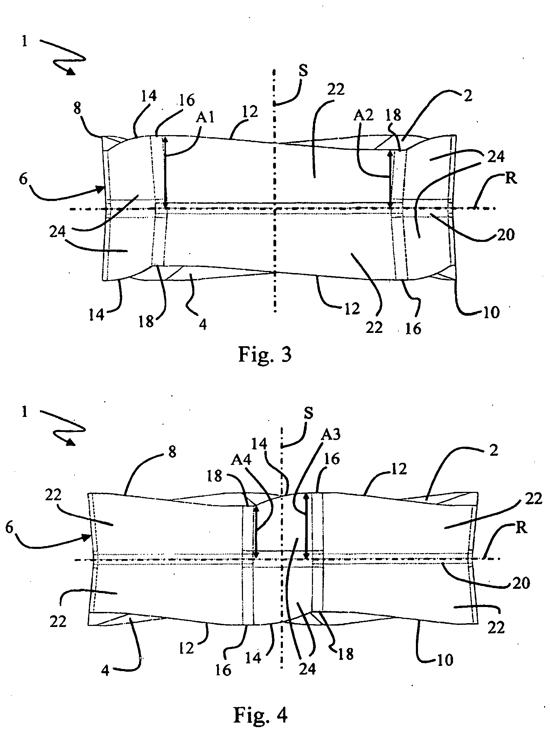

Wie z.B. in den Fig. 3 und Fig. 4 zu sehen ist, ist bezüglich der Referenzebene -R- jeweils eine aktive Schneidecke -16- der ersten Schneidkante -8- einer passiven Schneidecke -18- der zweiten Schneidkante -10- gegenüberliegend angeordnet. Eine passive Schneidecke -18- der ersten Schneidkante -8- ist jeweils einer aktiven Schneidecke -16- der zweiten Schneidkante -10- gegenüberliegend angeordnet.

Wie insbesondere in den Fig. 1 und Fig. 2 zu sehen ist, verlaufen die Hauptschneiden -12- der ersten Schneidkante -8- in einer Aufsicht entlang der Symmetrieachse -S- betrachtet im Wesentlichen parallel zu den Hauptschneiden -12- der zweiten Schneidkante -10-.

Wie insbesondere in den Fig. 1, Fig. 3 und Fig. 4 zu erkennen ist, weist der Schneideinsatz -1- eine Einschnürung -20- auf, die in der Referenzebene -R-verläuft. Die Einschnürung -20- ist umlaufend derart ausgebildet, dass die Seitenfläche -6- in eine obere Teilseitenfläche und eine untere Teilseitenfläche unterteilt ist. Die obere Teilseitenfläche und die untere Teilseitenfläche verlaufen dabei derart, dass unmittelbar angrenzend an die erste Schneidkante -8- und an die zweite Schneidkante -10- jeweils Hauptfreiflächen -22- und Nebenfreiflächen -24- gebildet sind. Die Hauptfreiflächen -22- sind bei der Ausführungsform jeweils durch ebene Flächen gebildet. Die Nebenfreiflächen -24- sind bei der Ausführungsform ebenfalls durch ebene Flächen gebildet.

Die Hauptfreiflächen -22- verlaufen derart, dass sie sich mit zunehmendem Abstand von der zugeordneten Hauptschneide -12- der Symmetrieachse -S-annähern, d.h. dass sie jeweils unter einem positiven nominellen Hauptfreiwinkel verlaufen. Die Nebenfreiflächen -24- verlaufen derart, dass sie sich mit zunehmendem Abstand von der zugeordneten Nebenschneide -14- der Symmetrieachse -S- annähern, d.h. dass sie jeweils unter einem positiven nominellen Nebenfreiwinkel verlaufen. Insgesamt ist der doppelseitige Schneideinsatz -1- somit derart ausgebildet, dass sowohl die Hauptfreiflächen -22- als auch die Nebenfreiflächen -24- jeweils unter positiven nominellen Freiwinkeln angeordnet sind.

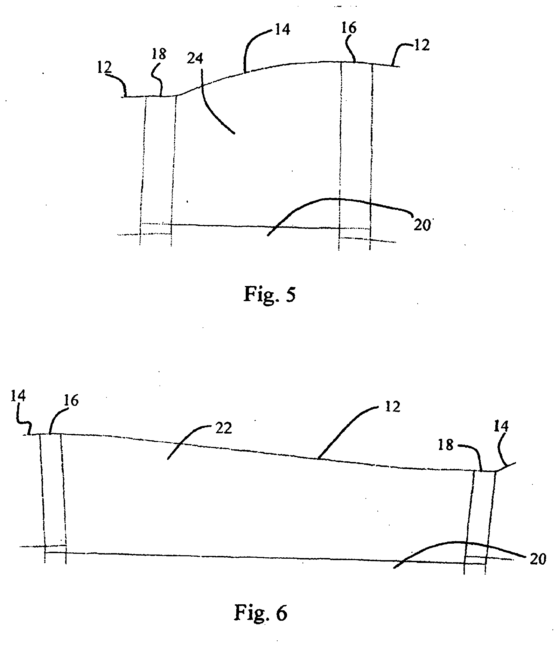

Der Verlauf der Hauptschneiden -12- wird im Folgenden unter Bezug auf die Fig. 3 und Fig. 6 eingehender beschrieben. Fig. 3 ist eine Seitenansicht des doppelseitigen Schneideinsatzes -1-, betrachtet in einer Richtung senkrecht zu der Symmetrieachse -S- und senkrecht zu der Einschnürung -20- im Bereich von Hauptfreiflächen -22-. Fig. 6 ist eine Detailansicht einer Hauptschneide -12-betrachtet aus einer Richtung senkrecht zu der zugeordneten Hauptfreifläche -22-. Wie in Fig. 3 ersichtlich ist, weist die Hauptschneide -12- in ihrem an die aktive Schneidecke -16- angrenzenden Bereich einen ersten Abstand -A1- zu der Referenzebene -R- auf. In ihrem Verlauf von der aktiven Schneidecke -16- zu der passiven Schneidecke -18- nähert sich die Hauptschneide -12- monoton fallend der Referenzebene -R- an. In ihrem an die passive Schneidecke -18- angrenzenden Bereich weist die Hauptschneide -12-einen zweiten Abstand -A2- zu der Referenzebene -R- auf, der kleiner als der erste Abstand -A1- ist. Wie in Fig. 3 zu sehen ist, verläuft die Hauptschneide -12- dabei ausgehend von der aktiven Schneidecke -16-zunächst relativ flach, fällt in einem Zwischenbereich stärker ab und verläuft in dem an die passive Schneidecke -18- angrenzenden Bereich wieder relativ flach.

Der Verlauf der Nebenschneiden -14- wird im Folgenden anhand der Fig. 4 und Fig. 5 eingehender beschrieben. Fig. 4 ist eine Seitenansicht des doppelseitigen Schneideinsatzes -1-, in einer Richtung senkrecht zu der Symmetrieachse -S- und senkrecht zu der Einschnürung -20- im Bereich der Nebenfreiflächen -24- betrachtet. Fig. 5 ist eine Detailansicht einer Nebenschneide -14-, in einer Richtung senkrecht zu der zugeordneten Nebenfreifläche -24- betrachtet. Wie insbesondere in Fig. 5 zu sehen ist, weist die Nebenschneide -14-, in einer Richtung senkrecht zu Nebenfreifläche -24-betrachtet, einen konvexen bzw. vorgewölbten Verlauf auf. Obwohl eine Ausführungsform dargestellt ist, bei der die Nebenschneide -14- über ihren gesamten Verlauf konvex ausgebildet ist, ist es z.B. auch möglich, dass die Nebenschneide -14- nur bereichsweise konvex ausgebildet ist, insbesondere in einem an die aktive Schneidecke -16- angrenzenden Bereich.

Das an die aktive Schneidecke -16- angrenzende Ende der Nebenschneide -14- weist einen dritten Abstand -A3- zu der Referenzebene -R- auf und das von der aktiven Schneidecke -16- abgewandte, andere Ende der Nebenschneide -14- weist einen vierten Abstand -A4- von der Referenzebene -R- auf, wobei der dritte Abstand -A3- größer als der vierte Abstand -A4- ist. Obwohl in den Figuren eine Ausführungsform gezeigt ist, bei der die Nebenschneide -14- nahe bei ihrem an die aktive Schneidecke -16-angrenzenden Ende den größten Abstand von der Referenzebene -R- aufweist, sind auch andere Ausgestaltungen möglich, bei denen der höchste Punkt der Nebenschneide -14- an einer anderen Stelle, insbesondere näher an der Mitte der Nebenschneide -14-, ausgebildet ist.

Im Folgenden wird die Ausgestaltung der Oberseite -2- und der Unterseite -4-unter Bezug auf Fig. 1, Fig. 7 und Fig. 8a bis Fig. 8c eingehender beschrieben. Die Beschreibung der spanleitenden Strukturen erfolgt dabei unter Bezugnahme auf die Oberseite -2-, wobei die Unterseite -4- gleichermaßen ausgestaltet ist und nicht separat beschrieben wird. Die Oberseite -2- ist mit einer spanleitenden Struktur versehen, die im Folgenden näher beschrieben wird.

Die spanleitende Struktur weist anschließend an die erste Schneidkante -8-eine Spanfläche auf, die sich in ihrem Verlauf von der Schneidkante -8- zu einem Zentrum des Schneideinsatzes -1- mit zunehmender Entfernung von der Schneidkante -8- an die Referenzebene -R- annähert und in einem Spangrund -26- mündet. Der Spangrund -26- erstreckt sich dabei umlaufend in einem Abstand von der Schneidkante -8- und bildet jeweils den minimalen Abstand der zwischen der Oberseite -2- und der Referenzebene -R-, wenn man ausgehend von der Schneidkante -8- in Richtung der Symmetrieachse -S-voranschreitet. Wie insbesondere in Fig. 1 zu sehen ist, ist die Spanfläche im Bereich der Nebenschneide -14- mit Nebenspanflächen -28- ausgebildet, die sich ausgehend von der konvex gekrümmten Nebenschneide -14- konvex gekrümmt bis in den Spangrund -26- erstrecken. Die Nebenspanflächen -28-bilden somit ausgewölbte Bereiche, die von der Nebenschneide -14- bis in den Spangrund -26- vorgewölbt verlaufen. Die konvexe Auswölbung ist dabei in einer Richtung parallel zu der Nebenschneide -14- gegeben.

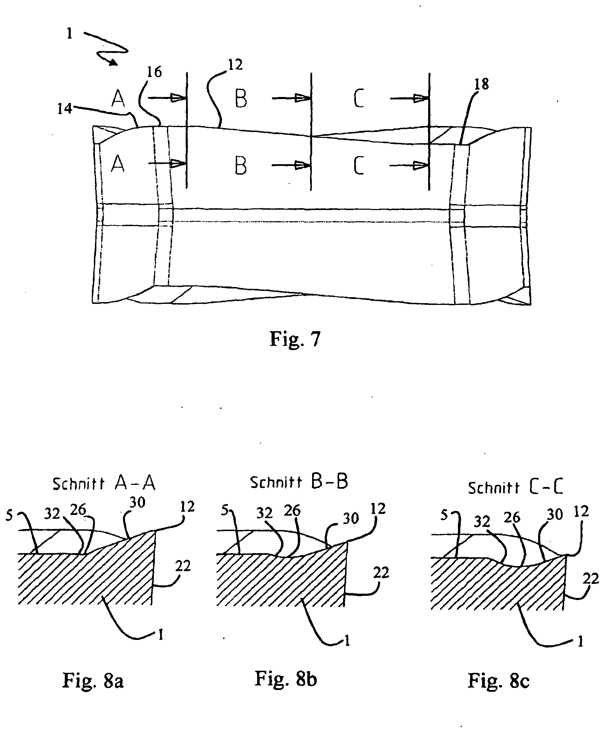

Der Verlauf der spanleitenden Struktur entlang der Hauptschneiden -12- wird anhand der Fig. 8a bis Fig. 8c eingehender beschrieben. Fig. 8a ist eine Schnittansicht entsprechend A-A in Fig. 7, Fig. 8b ist eine Schnittansicht entsprechend B-B in Fig. 7 und Fig. 8c ist eine Schnittansicht entsprechend C-C in Fig. 7. Entlang der Hauptschneide -12- ist die Spanfläche mit einer Hauptspanfläche -30- versehen, die sich ausgehend von der Hauptschneide -12- bis in den Spangrund -26- erstreckt. An den Spangrund -26- schließt sich in Richtung der Symmetrieachse -S- ein Spanrücken -32- an, der sich mit zunehmendem Abstand von der Schneidkante -8- von der Referenzebene -R- entfernt. Der Spanrücken -32-bildet ausgehend von dem Spangrund -26- einen ansteigenden Bereich. In Richtung zu der Symmetrieachse -S- geht der Spanrücken -32- in die ebene Fläche -5- über.

Wie insbesondere in den Fig. 8a bis Fig. 8c zu erkennen ist, nimmt die Höhe des Spanrückens -32- (gemessen in einer Richtung senkrecht zu der Referenzebene -R-) ausgehend von der aktiven Schneidecke -16- entlang der Hauptschneide -12- in Richtung zu der passiven Schneidecke -18- zu. Die Höhe des Spanrückens -32- ist in dem in Fig. 8a dargestellten Schnitt, also nahe der aktiven Schneidecke -16- sehr klein. In dem in Fig. 8b dargestellten Schnitt, also etwa in der Mitte der Hauptschneide -12-, ist die Höhe des Spanrückens -26- größer. In dem in Fig. 8c dargestellten Schnitt, d.h. nahe der passiven Schneidecke -18-, ist die Höhe des Spanrückens -26- noch größer. Mit anderen Worten nimmt der Abstand von dem jeweiligen tiefsten Punkt des Spangrundes -26-zu der ebenen Fläche -5- (gemessen in einer Richtung senkrecht zu der Referenzebene -R-) ausgehend von der aktiven Schneidecke -16- entlang der Hauptschneide -12- zu. Wie ebenfalls zu erkennen ist, nimmt der Radius der spanleitenden Struktur entlang der Hauptschneide -12- von der aktiven Schneidecke -16- in Richtung der passiven Schneidecke -18- zu. Anders ausgedrückt nimmt die Breite des Bereichs der spanleitenden Struktur, der näher an der Referenzebene verläuft, als die ebene Fläche -5-, ausgehend von der aktiven Schneidecke -16- entlang der Hauptschneide -12- zu, wobei die Breite in der Richtung von der Hauptschneide -12- zu der Symmetrieachse -S- zu messen ist.

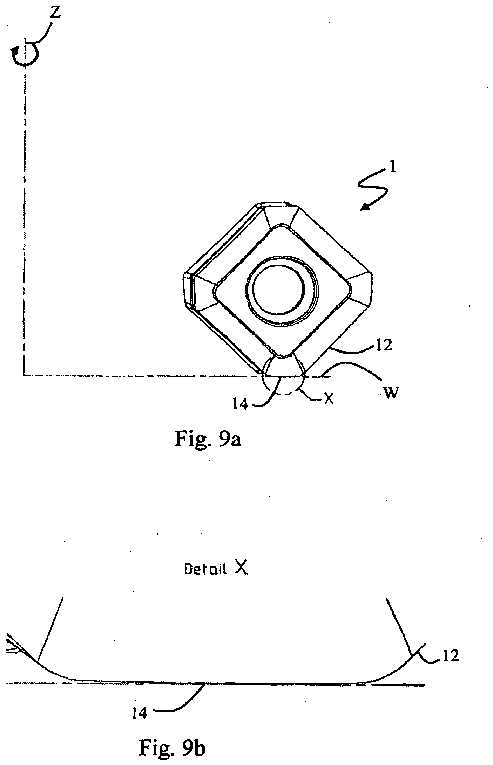

Im Folgenden wird noch unter Bezug auf Fig. 9a und Fig. 9b die Anordnung des doppelseitigen Schneideinsatzes -1- an einem Fräswerkzeug beschrieben. Um eine möglichst gute Erkennbarkeit der Ausrichtung des Schneideinsatzes -1- zu erreichen, ist in Fig. 9a lediglich der Schneideinsatz -1- dargestellt und das Fräswerkzeug selbst ist nicht abgebildet. In Fig. 9a ist allerdings eine Rotationsachse -Z-dargestellt, um die das Fräswerkzeug im Betrieb rotiert, wie schematisch durch einen Pfeil dargestellt ist. Ein zu der Rotationsachse -Z-senkrechte Ebene -W- ist in Fig. 9a ebenfalls schematisch dargestellt. Fig. 9b ist eine Detailansicht des Details X aus Fig. 9a.

Der Schneideinsatz -1- ist in dem Fräswerkzeug derart angeordnet, dass die mit dem Werkstück in Eingriff gelangende Nebenschneide -14- im Wesentlichen senkrecht zu der Rotationsachse -Z- ausgerichtet ist und als Planschneide für das zu bearbeitende Werkstück dient. Die an die Nebenschneide -14-angrenzende Hauptschneide -12-, die bezüglich der Rotationsachse -Z- radial außen angeordnet ist, bildet die mit dem zu bearbeitenden Werkstück in Eingriff gelangende (zerspanende) Hauptschneide. Der Schneideinsatz -1- ist dabei derart verkippt, dass die in Rotationsrichtung hinter der mit dem Werkstück in Eingriff gelangenden Nebenschneide -14- befindliche Nebenschneide -14- der anderen Schneidkante in axialer Richtung zurückversetzt ist und somit nicht verschlissen wird. Ferner ist der Schneideinsatz -1- zusätzlich auch so verkippt, dass die in Rotationsrichtung hinter der zerspanenden Hauptschneide -12-angeordnete Hauptschneide -12- der anderen Schneidkante in radialer Richtung zurückversetzt ist und somit nicht verschlissen wird. Durch die Ausgestaltung der Nebenfreifläche -24- und der Hauptfreifläche -22-in der beschriebenen Weise mit positiven nominellen Freiwinkeln, kann die Verkippung des Schneideinsatzes sowohl bezüglich der axialen Ausrichtung als auch bezüglich der radialen Ausrichtung sehr gering gehalten werden, was sich vorteilhaft auf die Zerspanungseigenschaften auswirkt. Durch die Ausgestaltung der Nebenschneide -14- mit der konvexen Formgebung wird ferner eine vorteilhafte Oberflächenqualität des zu bearbeitenden Werkstücks erzielt, bei der nur eine minimierte Ober-flächenwellung gegeben ist. Die resultierende leichte Krümmung der Nebenschneide -14- im leicht gekippten Einbauzustand, die die vorteilhafte Oberflächenqualität erzielt, ist insbesondere in Fig. 9b zu erkennen.

Obwohl eine Ausführungsform sehr genau beschrieben wurde, ist die Erfindung nicht auf die beschriebene Realisierung beschränkt. Insbesondere wurde eine bevorzugte Ausgestaltung des Schneideinsatzes -1- als sogenannte S-Platte mit vierfacher Indexierbarkeit pro Schneidkante (n = 4) beschrieben. Es sind z.B. jedoch auch andere Ausgestaltungen, z.B. mit 3-facher, fünffacher, sechsfacher, etc. Indexierbarkeit pro Schneidkante möglich.

## Patentansprüche

1. Doppelseitiger Schneideinsatz (1) zum Fräsen, insbesondere zum Planfräsen, mit:
einer Oberseite (2);
einer Unterseite (4);
einer umlaufenden Seitenfläche (6);
einer ersten Schneidkante (8), die an einem Übergang von der Oberseite (2) zu der umlaufenden Seitenfläche (6) ausgebildet ist;
einer zweiten Schneidkante (10), die an einem Übergang von der Unterseite (4) zu der umlaufenden Seitenfläche (6) ausgebildet ist;
einer Symmetrieachse (S) bezüglich der der Schneideinsatz n-zählige Rotationssymmetrie aufweist; und
einer senkrecht zu der Symmetrieachse (S) verlaufenden Referenzebene (R), die den Schneideinsatz in zwei Hälften unterteilt;
wobei die erste Schneidkante (8) und die zweite Schneidkante (10) jeweils aufweisen:
alternierend angeordnete Hauptschneiden (12) und
Nebenschneiden (14), die sich jeweils zwischen aktiven Schneidecken (16) und passiven Schneidecken (18) erstrecken, wobei: die umlaufende Seitenfläche (6) unmittelbar angrenzend an die Nebenschneiden (14) sich jeweils entlang der gesamten Nebenschneide (14) erstreckende, ebene Nebenfreiflächen (24) aufweist, die sich mit zunehmendem Abstand von der zugeordneten Nebenschneide (14) der Symmetrieachse (S) annähern
**dadurch gekennzeichnet, dass**
sich jede Hauptschneide (12) ausgehend von einem ersten Abstand (A1) zu der Referenzebene (R) an einer aktiven Schneidecke (16) monoton fallend auf einen kleineren, zweiten Abstand (A2) zu der Referenzebene (R) an einer passiven Schneidecke (18) erstreckt und das an der aktiven Schneidecke (16) anschließende Ende einer Nebenschneide (14) jeweils einen größeren Abstand (A3) zu der Referenzebene (R) aufweist, als das von der aktiven Schneidecke (16) abgewandte andere Ende der Nebenschneide (14);
wobei die jeweilige Nebenschneide (14) in Aufsicht auf die zugeordnete Nebenfreifläche (24) zumindest bereichsweise konvex ausgebildet ist und
wobei die Oberseite (2) und die Unterseite (4) angrenzend an die Schneidkanten (8; 10) mit Spanflächen (28; 30) versehen sind, die sich mit zunehmender Entfernung von der jeweiligen Schneidkante (8; 10) an die Referenzebene (R) annähern und in einem Spangrund (26) münden, an den sich ein Spanrücken (32) anschließt, der sich mit zunehmendem Abstand von der Schneidkante (8; 10) von der Referenzebene (R) entfernt, und dass die Höhe des Spanrückens (32) entlang der jeweiligen Hauptschneide (12) von der aktiven Schneidecke (16) in Richtung der passiven Schneidecke (18) zunimmt.

2. Schneideirisatz nach Anspruch 1, **dadurch gekennzeichnet,**
**dass** die umlaufende Seitenfläche (6) unmittelbar angrenzend an die Hauptschneiden (12) jeweils Hauptfreiflächen (22) aufweist und sich die Hauptfreiflächen (22) mit zunehmendem Abstand von der zugeordneten Hauptschneide (12) der Symmetrieachse (S) annähern.

3. Schneideinsatz nach einem der vorangehenden Ansprüche,
**dadurch gekennzeichnet, dass** die Oberseite (2) und die Unterseite (4) jeweils angrenzend an die Nebenschneiden (14) mit Nebenspanflächen (28) versehen sind, die sich konvex gekrümmt bis in einen Spangrund (26) erstrecken.

4. Schneideinsatz nach einem der vorangehenden Ansprüche,
**dadurch gekennzeichnet, dass** die umlaufende Seitenfläche (6) durch eine umlaufende Einschnürung (20) in eine obere Teilseitenfläche und eine untere Teilseitenfläche unterteilt ist.

5. Schneideinsatz nach Anspruch 4, **dadurch gekennzeichnet,**
**dass** die Einschnürung (20) in der Referenzebene (R) verläuft.

6. Schneideinsatz nach einem der vorangehenden Ansprüche,
**dadurch gekennzeichnet, dass** die Oberseite (2) und die Unterseite (4) jeweils mit einer eine Spanfläche (28; 30), einen Spangrund (26) und einen Spanrücken (32) aufweisenden spanleitenden Struktur versehen sind und ein Radius der spanleitenden Struktur entlang der Hauptschneide (12) von der aktiven Schneidecke (16) in Richtung der passiven Schneidecke (18) zunimmt.

7. Schneideinsatz nach einem der vorangehenden Ansprüche,
**dadurch gekennzeichnet, dass** die erste Schneidkante (8) und die zweite Schneidkante (10) jeweils mit vier Hauptschneiden (12) und vier Nebenschneiden (14) versehen sind, wobei benachbarte Hauptschneiden (12) jeweils im Wesentlichen rechtwinklig zueinander angeordnet sind und die Nebenschneiden (14) jeweils in einem stumpfen Winkel zu benachbarten Hauptschneiden (12) verlaufen.

8. Schneideinsatz nach einem der vorangehenden Ansprüche,
**dadurch gekennzeichnet, dass** aktive Schneidecken (16) der ersten Schneidkante (8) bezüglich der Referenzebene (R) jeweils passiven Schneidecken (18) der zweiten Schneidkante (10) gegenüberliegend ausgebildet sind und passive Schneidecken (18) der ersten Schneidkante (8) bezüglich der Referenzebene (R) jeweils aktiven Schneidecken (16) der zweiten Schneidkante (10) gegenüberliegend ausgebildet sind.

9. Schneideinsatz nach einem der vorangehenden Ansprüche,
**dadurch gekennzeichnet, dass** die Länge der Nebenschneiden (14) zwischen 1/6 und 1/2 der Länge der Hauptschneiden (12) beträgt.

10. Fräswerkzeug mit zumindest einem Schneideinsatz (1) nach einem der vorangehenden Ansprüche, **dadurch gekennzeichnet,**
**dass** der Schneideinsatz (1) derart an dem Fräswerkzeug befestigt ist, dass eine Nebenschneide (14) im Wesentlichen senkrecht zu einer Rotationsachse (Z) des Fräswerkzeugs ausgerichtet ist.

## Claims

1. A double-sided cutting insert (1) for milling, in particular for face milling, having:
a top side (2);
an underside (4);
a circumferential side surface (6);
a first cutting edge (8) which is formed at a transition from the top side (2) to the circumferential side surface (6);
a second cutting edge (10) which is formed at a transition from the underside (4) to the circumferential side surface (6);
an axis of symmetry (S) with respect to which the cutting insert has n-fold rotational symmetry; and
a reference plane (R) which extends perpendicularly to the axis of symmetry (S) and divides the cutting insert into two halves;
wherein the first cutting edge (8) and the second cutting edge (10) each have:
alternately arranged main lips (12) and secondary lips (14) which each extend between active cutting corners (16) and passive cutting corners (18), wherein:
the circumferential side surface (6) has, immediately adjacent to the secondary lips (14), planar secondary flanks (24) extending in each case along the entire secondary lip (14), the secondary flanks (24) coming closer to the axis of symmetry (S) with increasing distance from the associated secondary lip (14),
**characterized in that**
each main lip (12), starting from a first distance (A1) from the reference plane (R) at an active cutting corner (16), extends in a manner dropping monotonously to a smaller, second distance (A2) from the reference plane (R) at a passive cutting corner (18); and
that end of a secondary lip (14) that adjoins the active cutting corner (16) is in each case at a greater distance (A3) from the reference plane (R) than that end of the secondary lip (14) that is remote from the active cutting corner (16);
wherein each secondary lip (14) is formed at least regionally in a convex manner in plan view of the associated secondary flank (24), and
wherein the top side (2) and the underside (4) are provided, adjacent to the cutting edges (8; 10), with rake faces (28; 30) which come closer to the reference plane (R) with increasing distance from the respective cutting edge (8; 10) and lead into a chip base (26) which is adjoined by a chip back (32) which becomes more remote from the reference plane (R) with increasing distance from the cutting edge (8; 10), and **in that** the height of the chip back (32) increases along the respective main lip (12) from the active cutting corner (16) in the direction of the passive cutting corner (18).

2. The cutting insert as claimed in claim 1, **characterized**
**in that** the circumferential side surface (6) has, immediately adjacent to the main lips (12), in each case main flanks (22) and the main flanks (22) come closer to the axis of symmetry (S) with increasing distance from the associated main lip (12).

3. The cutting insert as claimed in one of the preceding claims,
**characterized in that** the top side (2) and the underside (4) are provided, in each case adjacent to the secondary lips (14), with secondary rake faces (28) which extend in a convexly curved manner into a chip base (26).

4. The cutting insert as claimed in one of the preceding claims,
**characterized in that** the circumferential side surface (6) is divided by a circumferential constriction (20) into an upper partial side surface and a lower partial side surface.

5. The cutting insert as claimed in claim 4, **characterized**
**in that** the constriction (20) extends in the reference plane (R).

6. The cutting insert as claimed in one of the preceding claims,
**characterized in that** the top side (2) and the underside (4) are each provided with a chip-guiding structure having a rake face (28; 30), a chip base (26) and a chip back (32), and a radius of the chip-guiding structure increases along the main lip (12) from the active cutting corner (16) in the direction of the passive cutting corner (18).

7. The cutting insert as claimed in one of the preceding claims,
**characterized in that** the first cutting edge (8) and the second cutting edge (10) are each provided with four main lips (12) and four secondary lips (14), wherein adjacent main lips (12) are each arranged substantially at right angles to one another and the secondary lips (14) each extend at an obtuse angle to adjacent main lips (12).

8. The cutting insert as claimed in one of the preceding claims,
**characterized in that** active cutting corners (16) of the first cutting edge (8) are each formed opposite passive cutting corners (18) of the second cutting edge (10) with respect to the reference plane (R) and passive cutting corners (18) of the first cutting edge (8) are each formed opposite active cutting corners (16) of the second cutting edge (10) with respect to the reference plane (R).

9. The cutting insert as claimed in one of the preceding claims,
**characterized in that** the length of the secondary lips (14) is between 1/6 and 1/2 of the length of the main lips (12).

10. A milling tool having at least one cutting insert (1) as claimed in one of the preceding claims, **characterized**
**in that** the cutting insert (1) is fastened to the milling tool in such a way that a secondary lip (14) is oriented in a manner substantially perpendicular to a rotation axis (Z) of the milling tool.

## Revendications

1. Insert de coupe à double face (1) pour le fraisage, en particulier pour une fraise à surfacer, comprenant :
une surface supérieure (2);
une surface inférieure (4);
une surface latérale périphérique (6);
une première arête de coupe (8) configurée au niveau d'une transition de la surface supérieure (2) vers la surface latérale périphérique (6);
une seconde arête de coupe (10) configurée au niveau d'une transition de la surface inférieure (4) vers la surface latérale périphérique (6);
un axe de symétrie (S) à l'égard duquel l'outil de coupe présente une symétrie de rotation d'ordre n,
et un plan de référence (R), perpendiculaire à l'axe de symétrie (S), qui divise l'insert de coupe en deux moitiés, tandis que la première arête de coupe (8) et
la seconde arête de coupe (10) présentent, chacune:
des lames de coupe principales (12) et des lames de coupe secondaires (14), disposées en alternance , qui s'étendent respectivement entre des coins de coupe actifs (16) et des coins de coupe passifs (18), tandis que la surface latérale périphérique (6) possède, immédiatement adjacentes aux lames de coupe secondaires (14), des surfaces de dépouille secondaires planes (24) qui s'étendent respectivement long de la totalité de la lame de coupe secondaire (14) correspondante et qui s'approchent de l'axe de symétrie (S) à mesure que s'accroît leur distance à l'égard de la lame de coupe secondaire (14) associée,
caractérisé, premièrement, en ce que chaque lame de coupe principale (12) s'étend, en décroissance monotone, à partir d'une première distance (A1) au plan de référence (R), d'un coin de coupe actif (16) jusqu'à une seconde distance (A2) au plan de référence (R), plus petite, d'un coin de coupe passif (18) et, deuxièmement, en ce que l'extrémité d'une lame de coupe secondaire (14) adjacente au coin de coupe actif (16) présente, chacune, une distance (A3) plus grande au plan de référence (R) que l'autre extrémité de la lame de coupe secondaire (14), opposée au coin de coupe actif (16), la lame de coupe secondaire (14) considérée présentant, en vue de dessus, sur la surface de dépouille secondaire (24) associée, une forme au moins partiellement convexe, et en ce que la surface supérieure (2) et la surface inférieure (4) possèdent, adjacentes aux arêtes de coupe (8 ; 10), des surfaces d'attaque (28 ; 30) qui s'approchent du plan de référence (R) à mesure que s'accroît leur distance à l'égard de l'arête de coupe correspondante (8; 10) et qui débouchent dans un fond d'attaque (26) auquel fait suite un dos d'attaque (32) qui s'éloigne du plan de référence (R) à mesure que s'accroît sa distance à l'égard de l'arête de coupe (8; 10) et, deuxièmement, en ce que la hauteur du dos d'attaque (32) augmente, le long de la lame de coupe principale (12) correspondante, à partir du coin de coupe actif (16) vers le coin de coupe passif (18).

2. Insert de coupe selon la revendication 1, **caractérisé en ce que** la surface latérale périphérique (6) possède des surfaces de dépouilles principales (22) immédiatement adjacentes aux lames de coupe principales (12) et **en ce que** lesdites surfaces de dépouille principales (22) s'approchent de l'axe de symétrie (S) à mesure que s'accroît leur distance à l'égard de la lame de coupe principale (12) associée.

3. Insert de coupe selon l'une quelconque des revendications précédentes, **caractérisé en ce que** la surface supérieure (2) et la surface inférieure (4) possèdent, respectivement adjacentes aux lames de coupe secondaires (14), des surfaces d'attaques secondaires (28) qui s'étendent en courbe convexe jusqu'à un fond d'attaque (26).

4. Insert de coupe selon l'une quelconque des revendications précédentes, **caractérisé en ce que** la surface latérale périphérique (6) est divisée, par un rétrécissement périphérique (20), en une surface latérale partielle supérieure et une surface latérale partielle inférieure.

5. Insert de coupe selon la revendication 4, **caractérisé en ce que** le rétrécissement (20) s'étend dans le plan de référence (R).

6. Insert de coupe selon l'une quelconque des revendications précédentes, **caractérisé en ce que** la surface supérieure (2) et la surface inférieure (4) sont, chacune, dotées d'une structure de guidage des copeaux qui possède une surface d'attaque (28; 30), un fond d'attaque (26) et un dos d'attaque (32) et **en ce qu'**un rayon de ladite structure de guidage augmente, le long de la lame de coupe principale (12), à partir du coin de coupe actif (16) vers le coin de coupe passif (18).

7. Insert de coupe selon l'une quelconque des revendications précédentes, **caractérisé en ce que** la première arête de coupe (8) et la seconde arête de coupe (10) sont dotées, chacune, de quatre lames de coupe principales (12) et de quatre lames de coupe secondaires (14), moyennant quoi les lames de coupe principales (12) voisines sont agencées, pour l'essentiel, en angle droit entre elles, tandis que les lames de coupe secondaires (14) s'étendent selon un angle obtus par rapport à des lames de coupe principales (12) voisines.

8. Insert de coupe selon l'une quelconque des revendications précédentes, **caractérisé en ce que** des coins de coupe actifs (16) de la première arête de coupe (8) sont agencées respectivement, par rapport au plan de référence (R), face à des coins de coupe passifs (18) de la seconde arête de coupe (10) et **en ce que** des coins de coupe passifs (18) de la première arête de coupe (8) sont agencées respectivement, par rapport au plan de référence (R), face à des coins de coupe actifs (16) de la seconde arête de coupe (10).

9. Insert de coupe selon l'une quelconque des revendications précédentes, **caractérisé en ce que** la longueur des lames de coupe secondaires (14) est comprise entre 1/6 et 1/2 de la longueur des lames de coupe principales (12).

10. Outil de fraisage comprenant au moins un insert de coupe (1) selon l'une quelconque des revendications précédentes, **caractérisé en ce que** ledit insert de coupe (1) est monté sur l'outil de fraisage de sorte telle qu'une lame de coupe secondaire (14) est orientée, pour l'essentiel, perpendiculairement à un axe de rotation (Z) de l'outil de fraisage.
